# EUROPÄISCHE PATENTSCHRIFT

(11) **EP 2 206 032 B1**
(45) Veröffentlichungstag und Bekanntmachung des Hinweises auf die Patenterteilung: **27.05.2020**
(21) Anmeldenummer: 08717145.0
(22) Anmeldetag: 26.02.2008
(51) Int. Cl.: G06F 1/32, G06F 1/26, G03G 15/00, H04N 1/00, G06F 1/3203, G06F 1/3228, G06F 1/3234, G06F 1/3296, G09G 3/20

(54) **ELEKTRONISCHES GERÄT, COMPUTER, ANORDNUNG UND VERFAHREN ZUM STEUERN EINES ELEKTRONISCHEN GERÄTS**
ELECTRONIC DEVICE, COMPUTER, ARRANGEMENT AND METHOD FOR ACTUATING AN ELECTRONIC DEVICE
APPAREIL ÉLECTRONIQUE, ORDINATEUR, DISPOSITIF ET PROCÉDÉ POUR COMMANDER UN APPAREIL ÉLECTRONIQUE

(30) Priorität: 02.11.2007 DE 102007052881
(43) Veröffentlichungstag der Anmeldung: 14.07.2010
(73) Patentinhaber: Fujitsu Client Computing Limited, Kawasaki-shi, Kanagawa-ken 211-8588 (JP)
(72) Erfinder: BÄSSLER, Erwin, 86343 Königsbrunn (DE); POLCZYNSKI, Bert-Ingo, 86316 Friedberg (DE); LÜCK, Thomas, 86179 Augsburg (DE)
(74) Vertreter: Epping - Hermann - Fischer
(86) Internationale Anmeldenummer: PCT/EP2008/052322
(87) Internationale Veröffentlichungsnummer: WO 2009/095085

(56) Entgegenhaltungen:
- EP-A- 1 199 697
- WO-A-99/44116
- US-A1- 2003 204 761
- US-A1- 2004 085 308
- US-A1- 2006 190 632
- US-B1- 6 769 070
- ANONYMOUS: "VESA Display Power Management Signaling"[Online] 1993, XP002488072 Gefunden im Internet: URL:http://en.wikipedia.org/wiki/VESA_Disp lay_Power_Management_Signaling> [gefunden am 2008-07-10]

## Beschreibung

Die Erfindung betrifft ein elektronisches Gerät, welches einen Betriebszustand und mindestens einen Energiesparzustand einnehmen kann, mit einer Stromversorgung, die an eine Netzspannung anschließbar ist und einer Auswerteeinheit, welche das elektronische Gerät vom Betriebszustand in den Energiesparzustand und umgekehrt steuern kann, wobei die Auswerteeinheit so mit der Stromversorgung verbunden ist, dass durch die Auswerteeinheit die Stromversorgung für die Einnahme des Energiesparzustandes abgeschaltet und für die Einnahme des Betriebszustandes wieder eingeschaltet werden kann und die Auswerteeinheit zumindest im abgeschalteten Zustand der Stromversorgung mit Energie aus einem weiteren elektronischen Gerät, das über eine Standardschnittstelle mit dem elektronischen Gerät verbunden ist, versorgt werden kann.

Aus der US2003/0204761 A1 ist eine derartige Lösung bekannt, bei der die Auswerteeinheit im Monitor über die 5V Leitung in der Standardschnittstelle versorgt wird und durch die Auswerteeinheit die Stromversorgung im Monitor ein- und ausgeschaltet werden kann.

Die 5V Leitung in der Standardschnittstelle dient dem Auslesen der DDC im Monitor, wenn der Computer eingeschaltet wird und der Monitor noch nicht eingeschaltet ist. Anhand der DDC Daten erkennt der Computer, welchen Monitor er ansteuern soll.

Die Leistung, die auf der 5V Leitung bereitgestellt wird hängt von der verwendeten Graphikkarte ab und ist oft extrem gering.

Die Auswerteeinheit im Monitor verbraucht jedoch ca. 500mW. Des Weiteren wird auch Leistung zum tatsächlichen Ein- und Ausschalten der Stromversorgung im Monitor benötigt.

Würde nach dem Konzept gemäß Figur 1 in der US2003/0204761 A1 zu wenig Energie über die Standardschnittstelle bereitgestellt werden, könnte die Auswerteeinheit den Monitor nicht einschalten.

Der Erfindung liegt daher die Aufgabe zugrunde, eine Lösung für dieses Problem aufzuzeigen.

Erfindungsgemäß wird diese Aufgabe dadurch gelöst, dass
- das elektronische Gerät über eine Standardschnittstelle mit dem weiteren elektronischen Gerät verbunden ist, wobei die Standardschnittstelle eine Spannungsleitung aufweist,
- die Auswerteeinheit zumindest im abgeschalteten Zustand der Stromversorgung mit Energie aus dem weiteren elektronischen Gerät über die Spannungsleitung der Standardschnittstelle versorgt wird
- die Standardschnittstelle eine VGA, eine DisplayPort nach dem VESA Standard, eine DVl-D oder eine HDMI Schnittstelle ist und
- das elektronische Gerät einen Kondensator und/oder einen Akku oder eine Solarzelle aufweist und zumindest zum Einschalten der Stromversorgung zusätzlich Energie aus dem Kondensator und/oder Energie aus dem Akku und/oder Energie aus der Solarzelle bereitgestellt werden kann.

Die Energie aus dem Kondensator und/oder Akku und /oder der Solarzelle bewirken, dass bei zu wenig zur Verfügung gestellter Leistung über die Standstandardschnittstelle, dennoch genügend Leistung für die Auswerteeinheit und das Einschalten des Netzteiles bereit gestellt ist.

Das Schalten des elektronischen Gerätes vom Betriebszustand in den Energiesparzustand kann zum Beispiel durch einen Schalter in der Zuführung der Netzspannung zu der Stromversorgung realisiert sein, der beim Abschalten der Stromversorgung gesteuert durch die Auswerteeinheit geöffnet wird.

Gemäß einer Ausführungsform weist die Auswerteeinheit hierzu ein Relais auf, wobei durch das Öffnen des Relais die Zuführung der Netzspannung zu der Stromversorgung unterbrochen werden kann.

Alternativ kann auch die Verbindung zwischen der Auswerteeinheit und der Stromversorgung als optoelektronische Kopplung ausgebildet sein.

Bei dieser Ausführungsform weist zum Beispiel die Auswerteeinheit eine Photodiode und die Stromversorgung einen Phototransistor auf, wobei über die Photodiode der Auswerteeinheit der Phototransistor so angesteuert werden kann, dass die Stromversorgung abgeschaltet und eingeschaltet werden kann.

Bei einer Stromversorgung, welche eine Wechselspannung durch Pulsweitenmodulation in eine Gleichspannung transformiert und hierzu einen Gleichrichter, einen Zerhacker und einen Übertrager aufweist, kann das Abschalten der Stromversorgung gemäß einer weiteren Ausbildung der Erfindung auch durch Abschaltung des Übertragers in einer derartigen Stromversorgung erfolgen.

Alternativ zum Abschalten des Übertragers kann auch eine Abschaltung einer derartigen Stromversorgung durch eine Reduzierung der Pulsweitenmodulation zum Beispiel auf 0 duty cycles erfolgen.

Bei der Ausbildung der Erfindung mit der Energieversorgung der Auswerteeinheit über einen Kondensator ist dieser günstigerweise mit der Stromversorgung des elektronischen Gerätes verbunden und wird im eingeschalteten Zustand der Stromversorgung über diese aufgeladen. Gleiches gilt für die Ausbildung der Erfindung mit Akku.

Bei der Ausbildung des elektronischen Gerätes mit Solarzelle und Kondensator und/oder Akku ist günstigerweise die Solarzelle mit dem Kondensator und/oder dem Akku verbunden, sodass diese zur längeren Aufrechterhaltung der Ladung des Kondensators und/oder des Akkus dient. Bei dieser Ausführungsform mit Solarzelle muss der Kondensator und/oder der Akku nicht zwangsläufig über die Stromversorgung im eingeschalteten Zustand aufgeladen werden, sondern die Aufladung kann auch nur durch die Solarzelle erfolgen.

Bei der Ausführungsform, bei welcher das elektronische Gerät über eine Standardschnittstelle an einem weiteren elektronischen Gerät angeschlossen ist, kann die Aufladung des Kondensators und/oder des Akkus zusätzlich oder auch alternativ über die Energie aus den Verbindungsleitungen der Standardschnittstelle erfolgen.

Günstigerweise ist im elektronischen Gerät zusätzlich noch eine Möglichkeit, wie zum Beispiel ein Schalter vorgesehen, welcher ein manuelles Einschalten der Stromversorgung erlaubt, wenn diese durch die Auswerteeinheit abgeschaltet wurde. Diese Einschaltmöglichkeit ist dann von Bedeutung, wenn das elektronische Gerät über lange Zeit, wie zum Beispiel zwischen Herstellung und erster Inbetriebnahme nicht mit Strom versorgt wurde und der Kondensator und/oder der Akku inzwischen durch Selbstentladung sich entleert hat bzw. haben.

Diese manuelle Einschaltmöglichkeit kann mit dem normalen Netzschalter am elektronischen Gerät kombiniert werden, der lediglich nochmals gedrückt beziehungsweise von EIN auf AUS nochmals auf EIN geschaltet werden muss.

Bei einer bevorzugten Ausführungsform, wertet die Auswerteeinheit die Spannungsleitung in der Standardschnittstelle aus.

Abhängig vom Spannungspegel oder, ob prinzipiell Spannung anliegt oder nicht, wird das elektronische Gerät in den Energiesparzustand gesteuert.

Alternativ oder zusätzlich können auch die weiteren Verbindungsleitungen der Standardschnittstelle, wie zum Beispiel HSYNC und VSYNC oder bei der Ausbildung als DVI-Schnittstelle die Taktleitung durch die Auswerteeinheit ausgewertet werden.

Die Auswertung der Sync-Leitungen und/oder der Taktleitung kann alternativ zur Auswertung der Spannungsleitung herangezogen werden, um der Auswerteinrichtung mitzuteilen, dass das elektronische Gerät vom Betriebszustand in den Energiesparzustand gesteuert werden soll. Wie beim VESA-Standard ermöglicht die Auswertung der weiteren Verbindungsleitungen der Standardschnittstelle, wie zum Beispiel der Sync-Leitungen, die Möglichkeit das elektronische Gerät in mehrere Energiesparzustände zu steuern, in dem zum Beispiel nur HSYNC oder VSYNC oder HSYNC und VSYNC unterbrochen werden. Eine Kombination der Auswertung der Spannungsleitung der Standardschnittstelle und der weiteren Verbindungsleitungen, wie zum Beispiel der Sync-Leitungen oder der Taktleitung, ermöglicht somit ebenfalls die Steuerung des elektronischen Gerätes in mehrere Energiesparzustände.

Des Weiteren betrifft die Erfindung auch ein Verfahren zum Steuern eines elektronischen Gerätes gemäß den vorher beschriebenen Ausführungsformen in mindestens einen Energiesparzustand beziehungsweise vom Energiesparzustand wieder in den Betriebszustand, wobei eine Auswerteeinheit im elektronischen Gerät die Verbindungsleitungen der Standardschnittstelle auswertet und die Auswerteeinheit so mit der Stromversorgung verbunden ist, dass durch die Auswerteeinheit die Stromversorgung ab- oder eingeschaltet werden kann. Das elektronische Gerät ist hierzu über eine Standardschnittstelle mit dem weiteren elektronischen Gerät verbunden und die Standardschnittstelle weist eine Spannungsleitung auf. Die Auswerteeinheit wird zumindest im abgeschalteten Zustand der Stromversorgung mit Energie aus dem weiteren elektronischen Gerät über die Spannungsleitung der Standardschnittstelle versorgt und die Standardschnittstelle ist eine VGA, eine DisplayPort nach dem VESA Standard, eine DVl-D oder eine HDMI Schnittstelle. Die Auswerteeinheit wird somit zum Einschalten der Stromversorgung mit Energie aus der Spannungsleitung der Standardschnittstelle und mit Energie aus einem Kondensator und/oder mit Energie aus einem Akku und/oder mit Energie aus einer Solarzelle versorgt.

Weitere Vorteile der Erfindung sind in den Unteransprüchen sowie in der Figurenbeschreibung offenbart.

Nachfolgend wird die Erfindung anhand einiger in den Figuren dargestellter Ausführungsbeispiele näher erläutert. In den Figuren zeigen:
Figur 1 eine schematische Darstellung eines ersten elektronischen Gerätes in Form eines LCD-Monitors, welcher über eine Standardschnittstelle mit einem zweiten elektronischen Gerät in Form eines Computers verbunden ist, mit einer Spannungsversorgung der Auswerteeinheit über die 5 bzw. 3.3 Volt-Leitungen der Standardschnittstelle,
Figur 2 die Ansicht gemäß Figur 1 mit einer Spannungsversorgung über einen Kondensator,
Figur 3 die Ansicht gemäß Figur 1 mit einer Spannungsversorgung mittels eines Akku,
Figur 4 die Ansicht gemäß Figur 1 mit einer Spannungsversorgung über eine Solarzelle und einen Akku,
Figur 5 die Ansicht gemäß Figur 2 mit zusätzlicher manueller Einschaltmöglichkeit der Stromversorgung,
Figur 6 die Ansicht gemäß Figur 3 in Kombination mit der Auswertung von weiteren Verbindungsleitungen der Standardschnittstelle,
Figur 7 die Ansicht gemäß Figur 6 in Kombination mit einer Solarzelle,
Figur 7a die Ansicht gemäß Figur 7 mit einem Signaldetektor zur Auswertung der SYNC-Leitungen der Standardschnittstelle,
Figur 7b die Ansicht gemäß Figur 7a mit manueller Einschaltmöglichkeit durch eine Verbindung zur 5 bzw. 3.3 Volt-Leitung der Standardschnittstelle,
Figur 8 eine Ausführungsform mit einem Mikroprozessor in der Auswerteeinheit,
Figur 9 die Ansicht gemäß Figur 8 mit Ausbildung des Mikroprozessors und des Scalers in einem gemeinsamen Baustein,
Figur 9a die Ansicht gemäß Figur 9 mit Auswertung der DDC-Leitungen durch die Auswerteeinheit,
Figur 9b eine Ausführungsform mit DisplayPort und direkter Ansteuerung eines Monitorpanels über LVDS-Daten,
Figur 10 eine schematische Darstellung des weiteren elektronischen Gerätes in Form eines Computers,
Figur 11 die Ansicht gemäß Figur 1 mit einer einfachen optoelektronischen Kopplung zwischen Auswerteeinheit und Stromversorgung,
Figur 12 die Ansicht gemäß Figur 11 mit Auswertung der weiteren Verbindungsleitungen der Standardschnittstelle,
Figur 13 ein Schaltbild einer Standby-Erkennungsschaltung zur Auswertung der Sync-Signale der Standardschnittstelle,
Figur 14 prinzipiell die Ausführungsform gemäß Figur 11 in Kombination mit Solarzelle und Akku oder Kondensator in Form eines Schaltplans,

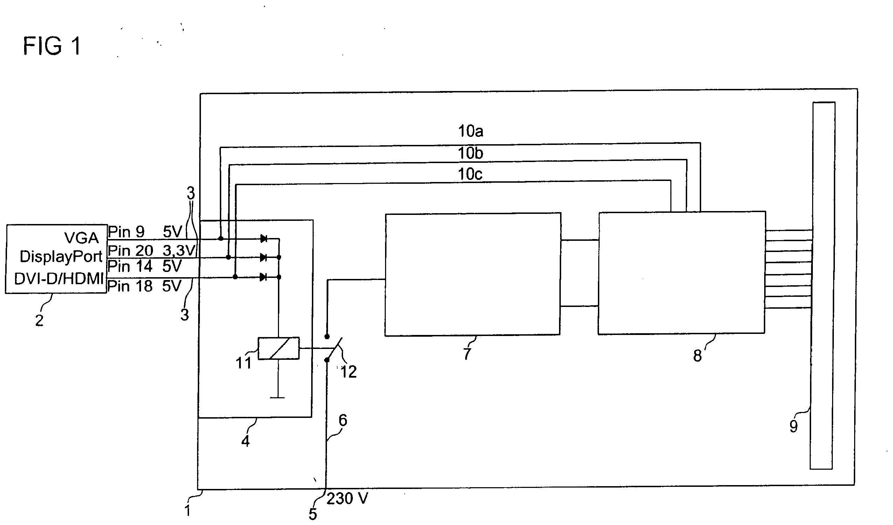

Figur 1 zeigt in schematischer Darstellung eine Anordnung aus einem ersten elektronischen Gerät 1 in Form eines LCD-Monitors und einem weiteren elektronischen Gerät 2 in Form eines Computers. Das erste elektronische Gerät 1 ist mit dem weiteren elektronischen Gerät 2 über eine Standardschnittstelle 3 verbunden. In Figur 1 sind drei Standardschnittstellen 3, einmal nach dem VGA-Standard, einmal als DisplayPort nach dem VESA Standard und einmal nach dem DVI-D-Standard bzw. HDMI-Standard eingezeichnet. Diese Darstellung soll nur zeigen, dass eine der Standardschnittstellen verwendet werden kann. In der Praxis ist das erste elektronische Gerät 1 mit dem weiteren elektronischen Gerät 2 nur über eine einzige Standardschnittstelle 3 verbunden.

Die Standardschnittstellen sowie auch die Verbindungsleitungen sind streng nach Spezifikation ausgebildet, wobei für die nähere Erläuterung auf die Definition der Standardschnittstellen verwiesen wird.

Im elektronischen Gerät 1 ist eine Auswerteeinheit 4 angeordnet, welche das erste elektronische Gerät 1 vom Betriebszustand in einen Energiesparzustand und umgekehrt steuern kann. Die Auswerteeinheit 4 ist kein mechanisches Bauteil, sondern eine logische Funktionseinheit, welche durch Schaltungen und elektronische Bauteile oder auch durch einen Mikroprozessor mit entsprechender Programmierung realisiert sein kann.

Das elektronische Gerät 1 weist einen Anschluss 5 für den Anschluss an die Netzspannung auf. Im dargestellten Ausführungsbeispiel wird eine Wechselspannung von 230 V an den Anschluss 5 angelegt. Diese Wechselspannung wird über eine Leitung 6 einer internen Stromversorgung 7 zugeführt, in welcher die Wechselspannung von 230 V in eine Gleichspannung mit 5 beziehungsweise 12 V umgewandelt wird.

Über die interne Stromversorgung 7 werden sämtliche Verbraucher im elektronischen Gerät 1 versorgt. Beispielhaft dargestellt sind ein Scaler-Baustein 8 sowie ein Panel 9, über welche die Bildinhalte dargestellt werden. Der Scaler-Baustein 8 ist über eine Leitung 10a mit der VGA-Standardschnittstelle 3 verbunden, sodass die über die VGA-Schnittstelle übertragenen Signale, wie zum Beispiel das RGB-Signal im Scaler-Baustein verarbeitet werden können.

Bei der Ausbildung als DisplayPort-Schnittstelle ist der Scaler-Baustein über eine Leitung 10b mit der DisplayPort-Standardschnittstelle 3 verbunden, sodass die Daten insbesondere die digitalen Daten über die DisplayPort-Standardschnittstelle 3 im Scaler-Baustein verarbeitet werden können.

Bei der Ausbildung mit einer DVI-D- oder HDMI-Schnittstelle ist der Scaler-Baustein über eine Leitung 10c mit der Standardschnittstelle 3 verbunden.

Ein elektronisches Gerät 1 in Form eines LCD-Monitors hat je nach Größe und Darstellung des Bildinhaltes einen Energieverbrauch im Betriebszustand von zirka 50 bis 200 W. Im Energiesparzustand bei Computermonitoren dem so genannten VESA OFF-Zustand beträgt der Energieverbrauch zirka 1 bis 2 W.

Der Verbrauch von 1 bis 2 W bei Geräten nach dem Stand der Technik rührt daher, dass auch im Energiesparzustand die Auswerteeinheit 3 mit Energie versorgt werden muss. In der Regel muss hierzu auch die Stromversorgung 7 intern betrieben werden, da die Auswerteeinheit 4 mit Gleichspannung versorgt werden muss. Der Verbrauch der Auswerteeinheit 4 liegt bei ca. 500 mW. Der Betrieb der Stromversorgung jedoch mindestens 1 bis 2 Watt.

Im dargestellten Ausführungsbeispiel gemäß Figur 1 wird die Auswerteeinheit 4 im Energiesparzustand mit Energie aus den Verbindungsleitungen der Standardschnittstelle 3 versorgt. Bei der Ausbildung der Standardschnittstelle als VGA-Schnittstelle ist dies der Pin 9, auf welchem 5 V anliegt, bei der Ausbildung als DVI-D-Standardschnittstelle 3 ist dies der Pin 14 und bei der Ausbildung als HDMI-Standardschnittstelle 3 ist dies der Pin 18, auf welchen jeweils eine 5 V-Spannung anliegt, sofern das daran angeschlossene weitere elektronische Gerät 2 in Form eines Computers eingeschaltet ist. Bei der Ausbildung als DisplayPort-Standardschnittstelle ist dies der Pin 20, auf welchem 3,3 V anliegen.

Die Auswerteeinheit 4 weist des weiteren ein Relais 11 auf, welches durch einen Schalter 12 in der Leitung 6 zwischen dem Anschluss 5 für die Netzspannung und der internen Stromversorgung 7 angeordnet ist. Das Relais 11 wird über die 5 bzw. 3.3 Volt-Spannung, aus den Verbindungsleitungen der Standardschnittstelle versorgt und kann zum Schalten des elektronischen Gerätes 1 in einen Energiesparzustand den Schalter 12 öffnen und zum Zurückschalten in den Betriebszustand den Schalter 12 wieder schließen.

Im dargestellten Ausführungsbeispiel kann die Steuerung des Relais 11 dadurch erfolgen, dass über das weitere elektronische Gerät 2 die 5 bzw. 3.3 Volt-Leitung der Standardschnittstelle 3 ein- oder abgeschaltet beziehungsweise unterbrochen wird.

Bei einem Ausbleiben der 5 bzw. 3.3 Volt-Spannung auf der entsprechenden Leitung der Standardschnittstelle 3 wird das Relais 11 nicht mit Strom versorgt, wodurch sich der Schalter 12 öffnet. Das elektronische Gerät 1 geht daher in einen Energiesparzustand, bei welcher keinerlei Energie, welche über die Netzspannung bereitgestellt wird, verbraucht wird. Der Stromverbrauch in diesem Energiesparzustand von Strom, welcher über die Netzspannung bereitgestellt wird, sinkt damit auf 0 W.

Liegt die Spannung auf der entsprechenden Leitung der Standardschnittstelle 3 wieder an, wird das Relais 11 wieder mit Spannung versorgt und der Schalter 12 in der Leitung 6 schließt sich. Das elektronische Gerät 1 befindet sich dadurch wieder im Betriebszustand.

Nachfolgend werden weitere Ausführungsformen der Erfindung erläutert. In den nachfolgenden Ausführungsbeispielen sind Elemente mit gleicher Funktion mit den identischen Bezugszeichen versehen und werden nicht näher erläutert.

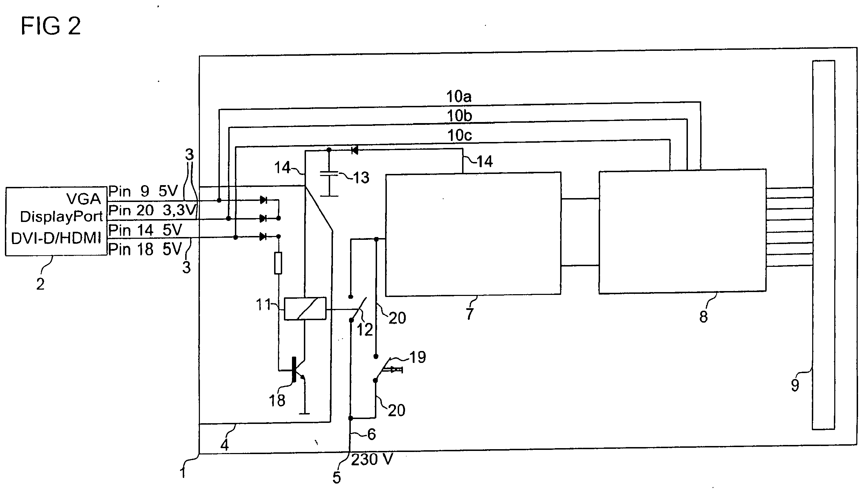

Figur 2 zeigt eine Ausführungsform, bei welcher die Auswerteeinheit 4 zum Teil über die 5 bzw. 3.3 Volt-Leitung der Standardschnittstelle 3 sowie auch über einen Kondensator 13, welcher über eine Leitung 14 mit der Auswerteeinheit 4 verbunden ist, im ausgeschalteten Zustand der Stromversorgung 7 mit Energie versorgt wird. Die Auswerteeinheit 4 weist hierzu einen Transistor 18 auf, wobei der Basisstrom für den Transistor 18 über die 5 bzw. 3.3 Volt-Spannungsleitung der Standardschnittstelle 3 bereitgestellt wird. Wird der Transistor 18 mit Spannung aus der 5 bzw. 3.3 Volt-Leitung der Standardschnittstelle beaufschlagt, schaltet das Relais 11 und schließt den Schalter 12, sodass das elektronische Gerät 1 vom Energiesparzustand in den Betriebszustand wechselt.

Das Relais 11 ist zusätzlich über die Leitung 14 mit dem Kondensator 13 verbunden, sodass im Ausführungsbeispiel gemäß Figur 2 im abgeschalteten Zustand der Stromversorgung 7, das heißt im Energiesparzustand die Auswerteeinheit 4 mit Energie aus den Verbindungsleitungen der Standardschnittstelle 3 sowie auch aus dem Kondensator 13 versorgt wird.

Für den Fall, dass der Kondensator 13 sich durch Selbstentladung im Laufe der Zeit entleert und für die Auswerteeinheit 4 über die Standardschnittstelle 3 zu wenig Energie für den Einschaltvorgang bereitgestellt werden kann, weist die Anordnung in der Netzleitung 6 eine Umgehungsleitung 20 für den Schalter 12 auf, in welcher ein weiterer Schalter 19 integriert ist. Der weitere Schalter 19 ist manuell von außen zu bedienen und dient dazu, die Stromversorgung 7 wieder mit der Netzspannung im Anschluss 5 durch Schließen des Schalters 19 zu verbinden, wenn der Kondensator 13 entleert beziehungsweise soweit entleert ist, dass zu wenig Energie für einen Einschaltvorgang über das Relais 11 und den Schalter 12 zur Verfügung steht.

Die Steuerung der Auswerteeinheit 4 kann entweder über die Spannungsleitungen der Standardschnittstelle 3 oder auch (in Figur 2 nicht dargestellt) über die Sync- oder bei Ausbildung als DVI-, HDMI- oder DisplayPort-Standardschnittstelle über die Taktleitungen erfolgen.

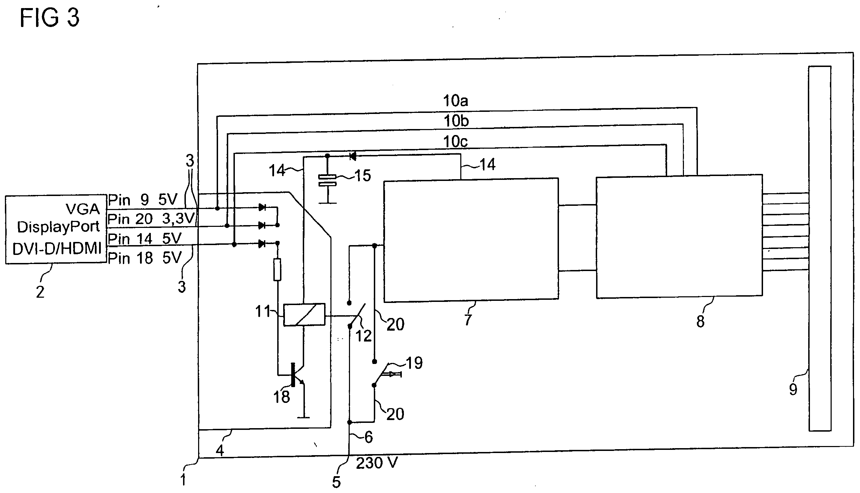

Figur 3 zeigt im Wesentlichen die gleiche Ausführungsform wie Figur 2, wobei anstelle des Kondensators 13 ein Akku 15, in der Regel ein elektrochemischer Energiespeicher für die Energieversorgung der Auswerteeinheit 4 zumindest im Energiesparzustand des elektrischen Gerätes 1 verwendet wird. Der Akku 15 ist ebenfalls über die Leitung 14 mit der Stromversorgung 7 verbunden und wird im Betriebszustand des elektronischen Gerätes 1 über die Stromversorgung 7 aufgeladen.

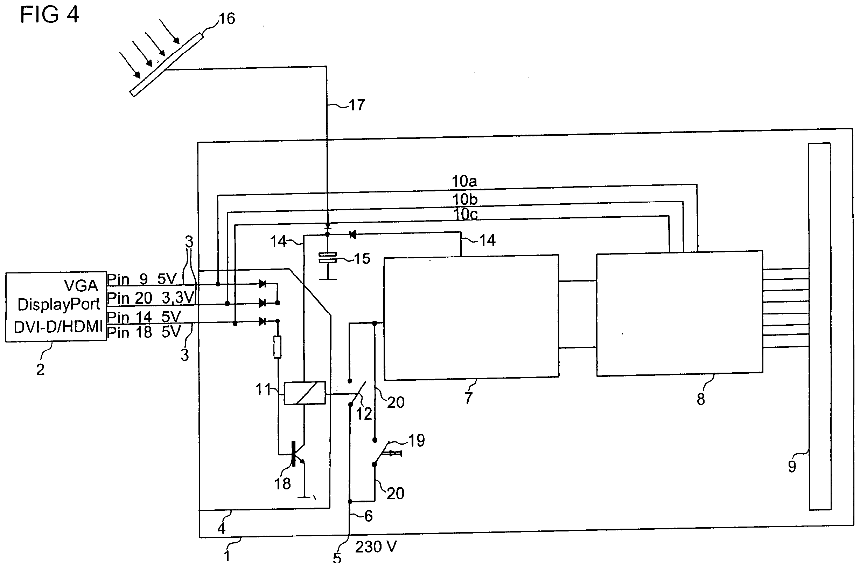

Figur 4 zeigt im Wesentlichen die Anordnung gemäß Figur 2, wobei zur Energieversorgung der Auswerteeinheit 4 eine Solarzelle 16 mit der Auswerteeinheit 4 über eine Leitung 17 verbunden ist. Die Steuerung der Auswerteeinheit 4 beziehungsweise die Signalisierung, ob das elektronische Gerät 1 in einen Energiesparzustand schalten soll, kann über die 5 bzw. 3.3 Volt-Leitung der Standardschnittstelle 3 oder auch (in Figur 4 nicht dargestellt) über die Sync- oder Taktleitung der Standardschnittstelle 3 erfolgen.

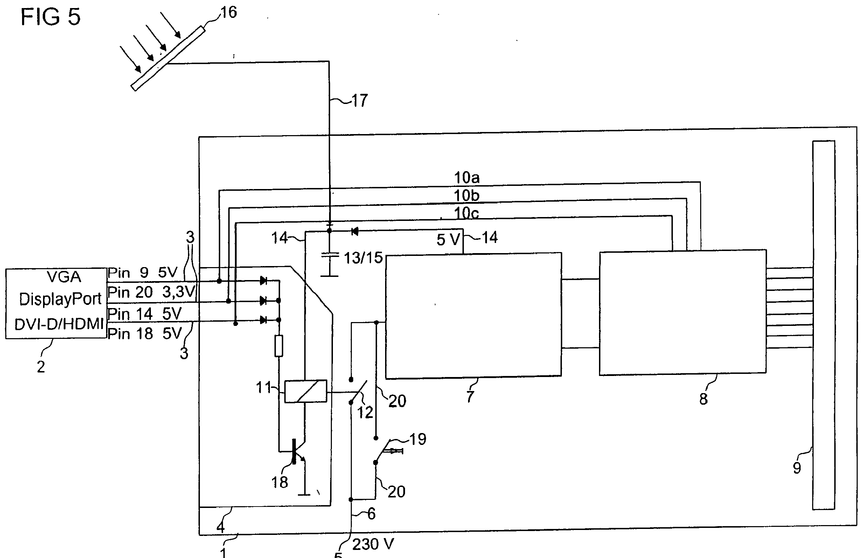

Figur 5 zeigt im Wesentlichen die Ausführungsform gemäß Figur 4, wobei an Stelle des Akkus 15 auch ein Kondensator 13 vorgesehen sein kann. Allgemein formuliert ist ein Energiespeicher 13/15 vorgesehen, welche über die 5 bzw. 3.3 Volt Leitung der Stromversorgung 7 im eingeschalteten Zustand des zweiten elektronischen Gerätes 1 oder über die Solarzelle 16 aufgeladen wird.

Für den Fall, dass der Energiespeicher 13/15 sich durch Selbstentladung im Laufe der Zeit entleert und für die Auswerteeinheit 4 über die Standardschnittstelle 3 zu wenig Energie für den Einschaltvorgang bereitgestellt werden kann, weist die Anordnung ebenso wie bei der Ausbildung gemäß Figur 2 in der Netzleitung 6 eine Umgehungsleitung 20 für den Schalter 12 auf, in welcher ein weiterer Schalter 19 integriert ist. Der weitere Schalter 19 ist manuell von außen zu bedienen und dient dazu, die Stromversorgung 7 wieder mit der Netzspannung im Anschluss 5 durch Schließen des Schalters 19 zu verbinden, wenn der Energiespeicher 13/15 entleert beziehungsweise soweit entleert ist, dass zu wenig Energie für einen Einschaltvorgang über das Relais 11 und den Schalter 12 zur Verfügung steht.

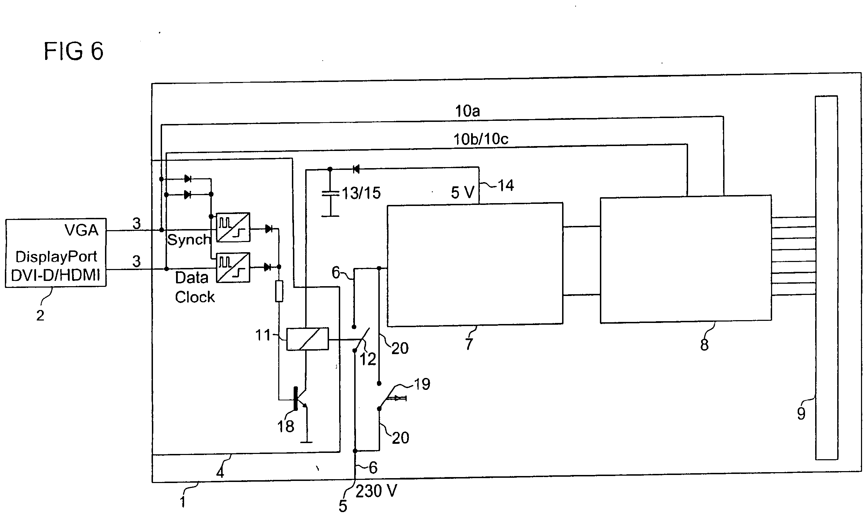

Figur 6 zeigt eine Abwandlung der Ausführungsform gemäß Figur 5 ohne Solarzelle 16. Die HDMI-Schnittstelle und die DisplayPort-Schnittstelle sind zusammen mit der DVI-D-Standardschnittstelle dargestellt und nicht separat eingezeichnet.

Für die Steuerung der Auswerteeinheit in den Energiesparzustand bei der Ausbildung als VGA-Standardschnittstelle 3 wird in dieser Ausführungsform nicht nur die 5 bzw. 3.3 Volt-Leitung, sondern werden auch die Sync-Leitungen, das heißt die Leitungen für HSYNC und VSYNC ausgewertet. Bei der Ausbildung als DisplayPort-, HDMI- oder DVI-D-Standardschnittstelle 3 wird zusätzlich zu der 5 bzw. 3.3 Volt-Leitung auch die Data Clock-Leitung zur Signalisierung der Auswerteeinheit 4, ob diese das elektrische Gerät 1 in einen Energiesparzustand schalten soll oder nicht, verwendet.

Durch die Verwendung der Sync-Leitungen beziehungsweise den Data Clock-Leitungen alternativ oder zusätzlich zur 5 bzw. 3.3 Volt-Leitung in der Standardschnittstelle 3 ist es möglich, das elektronische Gerät 1 in mehrere Energiesparzustände zu steuern. Die weiteren Verbraucher, welche bei den Zwischenenergiesparzuständen, bei welchen die Stromversorgung noch nicht von der Netzspannung getrennt ist, abgeschaltet werden und wie dies erfolgt, ist in der schematischen Darstellung gemäß Figur 6 nicht eingezeichnet.

Im Energiesparzustand, welcher die größte Energieeinsparung erzielen soll, d.h. einem Energiesparzustand, wie er dem VESA OFF Modus entspricht, ist es daher möglich die Stromversorgung 7 des ersten elektronischen Gerätes abzuschalten und somit auch den Stand-By-Verbrauch der Stromversorgung 7 einzusparen.

Im Monitor bzw. im ersten elektronischen Gerät wird daher nicht nur beim Ausschalten des zweiten elektronischen Gerätes, in der Regel des Computers oder beim Unterbrechen der 5 bzw. 3.3 Volt Leitung der Standardschnittstelle die Stromversorgung abgeschaltet, sondern auch bei einer Signalisierung unabhängig von der 5 bzw. 3.3 Volt Leitung der Standardschnittstelle.

Wird zum Beispiel ein Stand-By oder Suspend oder OFF-Mode von dem ersten elektronischen Gerät 2 signalisiert, kann die Auswerteeinheit 4 dies auswerten und das zweite elektronische Gerät 1 in einen Energiesparzustand schalten, in welchem keine Energie von der über den Anschluss 5 bereitgestellten Netzspannung verbraucht wird.

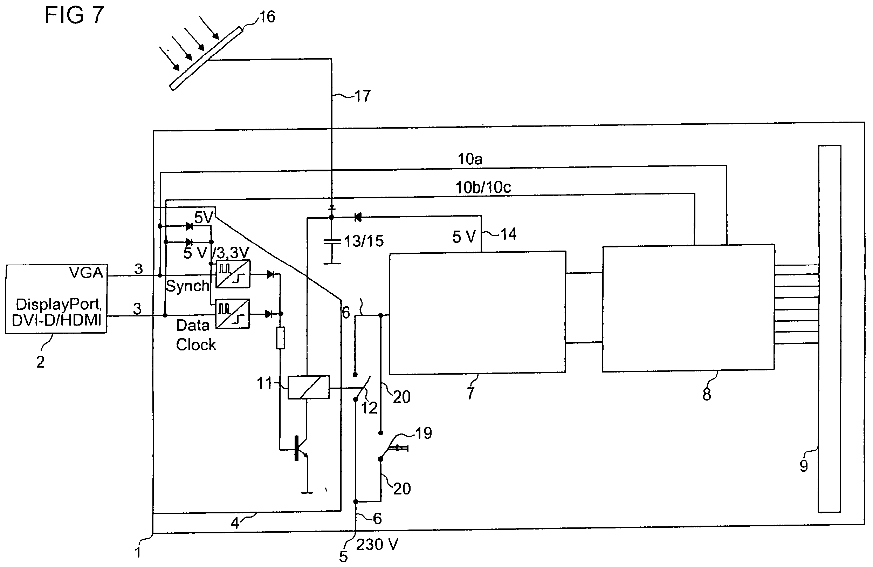

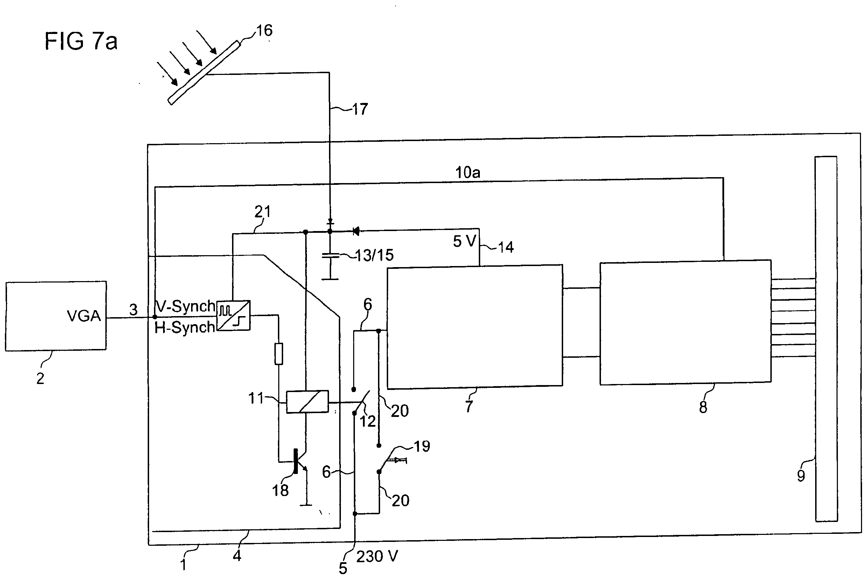

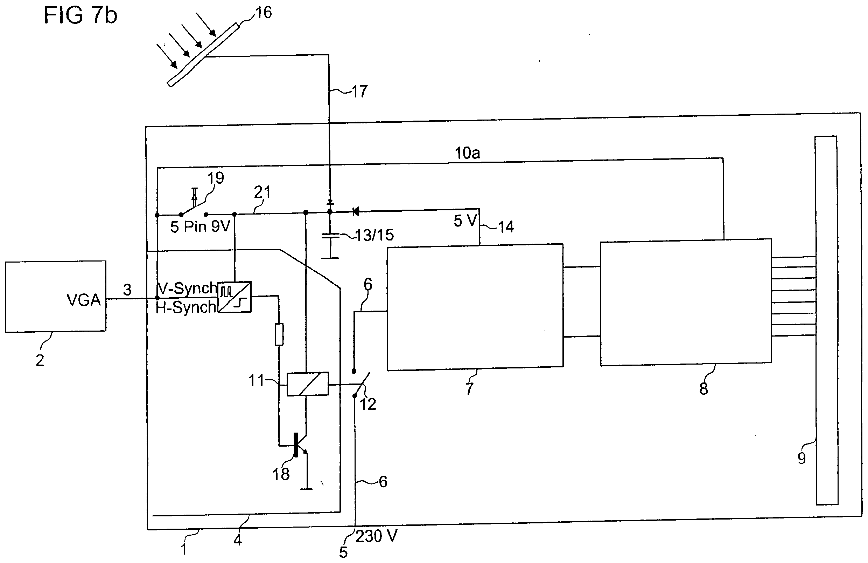

Figur 7 zeigt die Ausführungsform gemäß Figur 6 mit Solarzelle 16. Die Solarzelle 16 ist über die Leitung 17 mit dem Energiespeicher 13/15 verbunden und kann diesen somit aufladen.

Figur 7a stellt eine Abwandlung zur Ausführungsform gemäß Figur 7 dar. Zur Vereinfachng ist nur die VGA-Standardschnittstelle 3 eingezeichnet. Bei der Ausführungsform gemäß Figur 7a wird nicht die 5 bzw. 3.3 Volt-Spannungsleitung der Standardschnittstelle 3 für die Versorgung und Steuerung der Auswerteeinheit 4 verwendet. Das Relais 11 wird mit Energie aus dem Kondensator 13 oder dem Akku 15 oder der Solarzelle 16 im abgeschalteten Zustand der Stromversorgung 7 versorgt. Der Basisstrom für den Transistor 18 wird ebenfalls über die Solarzelle 16 und den Kondensator 13 bzw. dem Akku 15 über eine Verbindungsleitung 21 bereitgestellt. Die Verbindungsleitung 21 versorgt auch den Teil der Auswerteeinheit 4 mit Strom, welcher die Sync-Signale beziehungsweise bei Ausbildung der Standardschnittstelle nach dem HDMI-, DVI-D- oder DisplayPort- Standard, die Data Clock-Signale der Standardschnittstelle 3 auswertet. Je nachdem, ob entsprechend der Signalisierung das elektronische Gerät 1 in einen Energiesparzustand geschaltet oder wieder in den Betriebszustand zurückgeschaltet werden soll, wird der Transistor 18 mit Spannung beaufschlagt oder nicht.

Figur 7b zeigt eine Abwandlung zu Figur 7a, wobei die Verbindungsleitung 21 bei dieser Ausführungsform über einen Schalter 19 mit der 5 bzw. 3.3 Volt Leitung der Standardschnittstelle 3 verbunden ist. Sollte der Energiespeicher 13/15 leer sein und auch durch die Solarzelle 16 keine Energie für die Betätigung des Schalters 12 bereitgestellt werden können, kann manuell der Schlater 19 betätigt werden, wodurch wieder die Energie über die 5 bzw. 3.3 Volt-Leitung der Standardschnittstelle zur Verfügung steht und diese Energie aus der 5 bzw. 3.3 Volt-Leitung der Standardschnittstelle kann zur Betätigung des Schalters 12 genutzt werden.

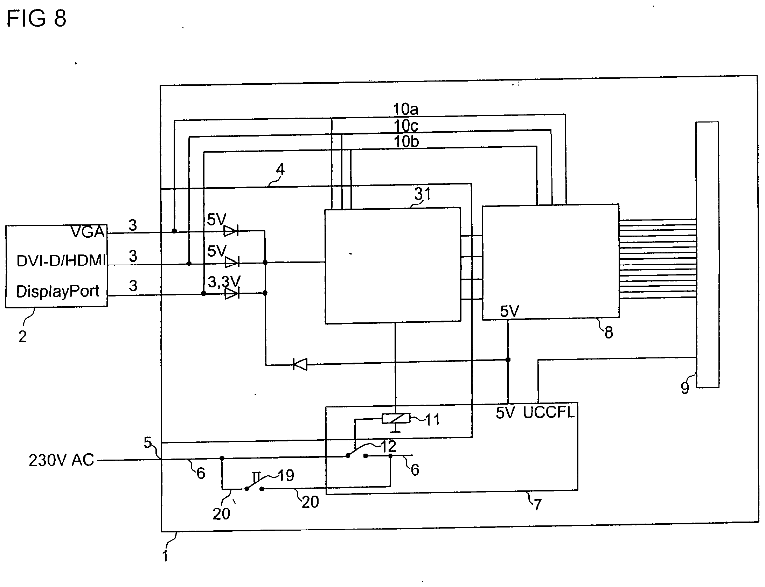

Figur 8 zeigt eine Ausführungsform, bei welcher das Relais 11, welches den Schalter 12 in der Leitung 6 öffnen und schließen kann, über einen Mikroprozessor 31 gesteuert wird. Der Mikroprozessor 31 wird über die 5 bzw. 3.3 Volt-Leitung der Standardschnittstelle 3 versorgt und wertet auch die weiteren Leitungsverbindungen der Standardschnittstelle 3 aus.

Ist der PC, d.h. das zweite elektronische Gerät 2 im On-Mode, wird der Mikroprozessor 31 im Monitor, d.h. im ersten elektronischen Gerät 1 vom PC mit über die Standardschnittstelle 3 mit 5 bzw. 3.3 Volt versorgt. Die Versorgung des Mikroprozessors 31 über die 5 bzw. 3.3 Volt Leitung der Standardschnittstelle wird auch dann aufrecht erhalten, wenn der Monitor 1 vom PC 2 aus in den Standby-Mode gesteuert wird. Anhand der Steuersignale (H-Sync und V-Sync bei VGA, Takt aus bei DVI, HDMI und DisplayPort) erkennt der Mikroprozessor 31, welchen Zustand der Monitor 1 einnehmen soll - eingeschaltet oder Stand-By (0 Watt).

Ist der PC 2 im Standby- oder Deep Sleep Mode oder ausgeschaltet, fehlen die 5 bzw. 3.3 Volt auf der entsprechenden Verbindungsleitung der Standardschnittstelle 3 und das Relais 11 im Monitor 1 ist ausgeschaltet. Um einen Monitorbetrieb auch bei fehlender 5 bzw. 3.3 Volt-Versorgung vom ansteuernden elektronischen Gerät 2(PC, DVD-Player, ..) zu gewährleisten, ist ein Schalter 19 zur Überbrückung des Relaiskontaktes, d.h. des Schalters 12 vorgesehen. Bei geschlossenem Schalter 19 ist der 0 Watt Mode abgeschaltet und der Monitor verbraucht am Netz (230V) angesteckt mindestens 0,5 bis 2 Watt.

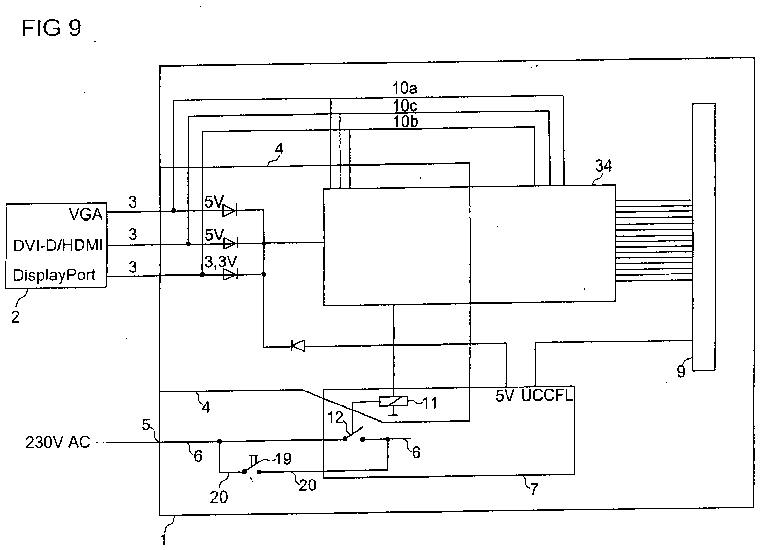

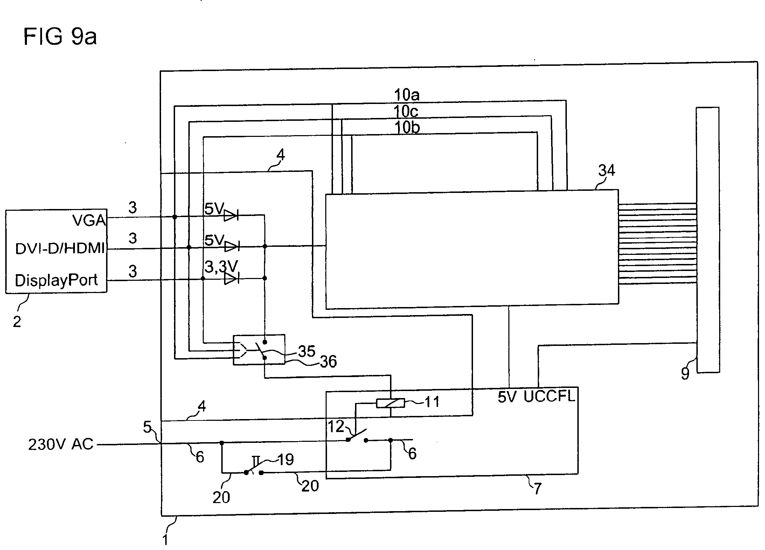

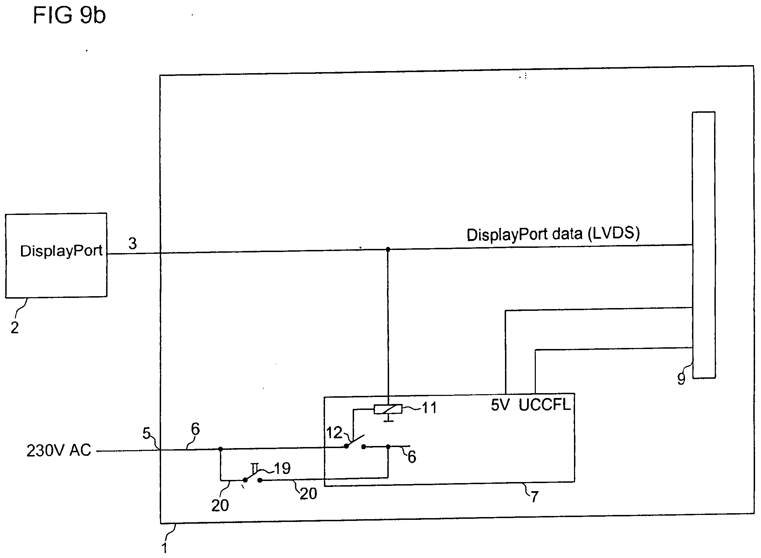

Figur 9 zeigt im Wesentlichen die Ausführungsform gemäß Figur 8, wobei der Mikroprozessor 31 und der Scaler 8 in einem gemeinsamen Baustein 34 einem sogenannten IC (IC = Integrated Circuit) zusammengefasst sind.

Figur 9a zeigt eine Abwandlung zu Figur 9. Bei dieser Ausführungsform werden die Leitungen in der Standardschnittstelle 3 für die Übertragung der DDC-Daten (DDC Display Data Channel) ausgewertet. Die DDC-Daten werden auf einem I²C-bus übertragen, wobei die Leitungen SDA (System Data) und SCL (System Clock) zur Steuerung eines Schalters 35 in der Leitungsverbindung zwischen der 5 bzw. 3.3 Volt-Leitung der Standardschnittstelle 3 und dem Relais 11 verwendet werden. Der Schalter 35 ist in einem Logikbaustein 36 integriert, der auch Bestandteil des Mikrokontrollers 31 sein kann. Wird der Schalter 35 geschlossen, wird das Relais 11 bestromt und der Schalter 12 ebenso geschlossen. Signalisieren die DDC-Daten hingegen, dass ein Standby-Zustand eingenommen werden soll, wird der Schalter 35 geöffnet, wodurch auch das Relais 11 den Schalter 12 öffnet.

Figur 9b zeigt eine Ausführungsform, bei der die Standardschnittstelle 3 als DisplayPort ausgebildet ist und LVDS-Daten (LVDS = Low Voltage Differential Signaling) direkt an das Panel 9 übertragen werden. Das Relais 11 ist direkt an die 5 bzw. 3.3 Volt Leitung der Standardschnittstelle 3 angeschlossen.

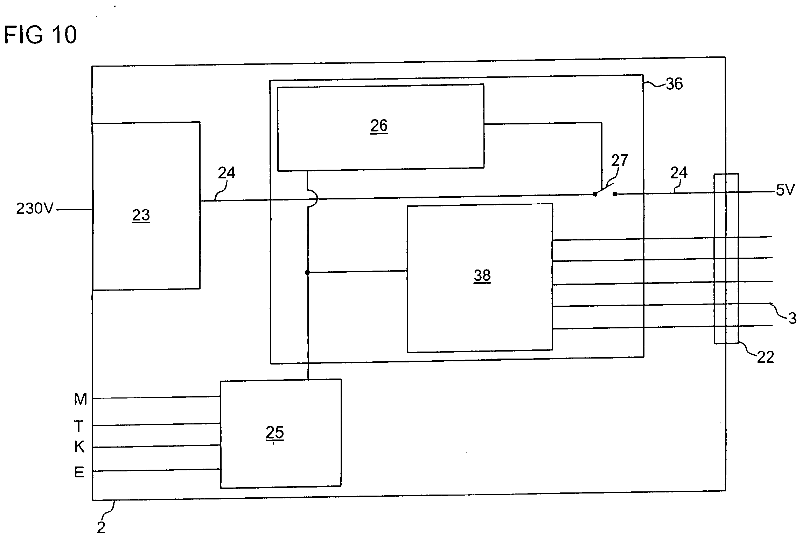

Figur 10 zeigt das weitere elektronische Gerät 2 in Form eines Computers in schematischer Darstellung.

Das elektronische Gerät 2 weist einen Anschluss 22 für die Verbindungsleitungen einer Standardschnittstelle 3 auf. Die Standardschnittstelle 3 ist in Figur 10 nicht genauer spezifiziert und kann eine VGA- oder DVI-Schnittstelle oder eine sonstige Standardschnittstelle wie z.B. eine HDMI- oder DisplayPort-Schnittstelle sein.

Auf alle Fälle weist die Standardschnittstelle 3 eine Spannungsleitung, in der Regel eine 5V- oder 3,3V-Spannungsleitung auf.

Intern ist in dem elektronischen Gerät 2 eine Stromversorgung 23 angeordnet, welche an die Netzspannung angeschlossen werden kann und die Gleichspannung über eine Leitung 24 am Anschluss 22 bereitstellt.

Im elektronischen Gerät 2 ist des Weiteren eine Messeinrichtung 25 vorgesehen, welche mit Eingabegeräten, wie zum Beispiel einer Kamera K, einer Maus M, einer Tastatur T oder eines Eingabegerätes E verbunden ist und die Zeit messen kann, in welcher zum Beispiel keine Eingabe erfolgt oder über die Kamera feststellen kann, ob ein Benutzer vor dem Bildschirm sitzt oder nicht. Nach einer bestimmten Zeit, der Untätigkeit, welche normalerweise im Betriebssystem eingestellt werden kann, gibt die Messeinrichtung 25 an eine daran angeschlossene Steuereinrichtung 26 ein Signal weiter, welches bewirkt, dass ein Schalter 27 in der Verbindungsleitung 24, das heißt der Leitung für den 5 bzw. 3.3 Volt-Pin der Standardschnittstelle 3 geöffnet wird. Zur Steuerung des ersten elektronischen Gerätes 1 in einen Energiesparzustand wird die 5 bzw. 3.3 Volt-Leitung durch das Öffnen des Schalters 27 unterbrochen, wodurch dann die Auswerteeinheit 4 im ersten elektronischen Gerät 1 dieses in den Energiesparzustand versetzt. Die Steuereinrichtung 26 sowie der Schalter 27 sind Teil eines Grafikkontrollers 37. Der Grafikkontroller 37 umfasst ferner ein Bauteil 38 zur Bilddatenerzeugung, welches die Bilddaten der Standardschnittstelle 3 zuleitet.

Alternativ kann in dem zweiten elektronischen Gerät 2 anstatt dem Schalter auch die 5 bzw. 3.3 Volt-Leitung auf einen niederen Spannungspegel geschaltet werden.

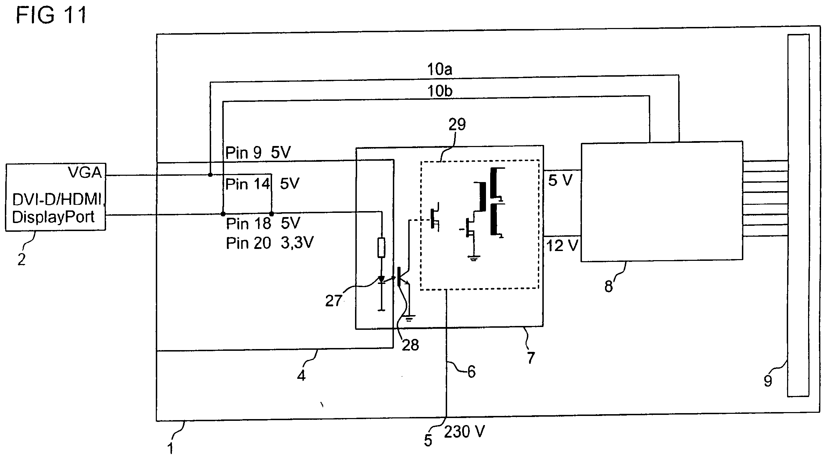

Figur 11 zeigt eine Anordnung aus dem ersten elektronischen Gerät 1 und dem zweiten elektronischen Gerät 2 in einer Ausführungsform ähnlich der Figur 1, wobei die Abschaltung der Stromversorgung 7 nicht durch einen Schalter 12 in der Zuführleitung 6 von der Netzspannung zur Stromversorgung erfolgt, sondern hierzu eine einfache optische Kopplung verwendet wird.

Die Auswerteeinheit 4 weist hierzu eine Photodiode 27 auf, welche über die 5 bzw. 3.3 Volt-Spannungsleitung der Standardschnittstelle versorgt wird. Die Stromversorgung 7 weist einen entsprechenden Phototransistor 28 auf, welcher über die Photodiode 27 angesteuert werden kann. Im dargestellten Ausführungsbeispiel wird bei der Stromversorgung die Wechselspannung über einen Pulsweitenmodulator 29 von einer Wechselspannung von zum Beispiel 230 V in eine Gleichspannung von 5 beziehungsweise 12 V gewandelt. Der Pulsweitenmodulator weist hierzu einen Gleichrichter, einen Zerhacker oder einen Übertrager auf, wobei der Phototransistor 28 den Übertrager im Pulsweitenmodulator 29 für die Steuerung des elektronischen Gerätes 1 in einen Energiesparzustand abschalten kann.

Durch diese Lösung ergibt sich ein stark verringerter Stromverbrauch im Energiesparzustand von < 0,05 W von der über den Anschluss 5 beziehungsweise die Leitung 6 bereitgestellten Wechselspannung.

Alternativ zur Abschaltung des Übertragers kann auch die Anzahl der duty cycles bei der Pulsweitenmodulator stark reduziert beziehungsweise auf 0 duty cycles eingestellt werden.

Beim Ausführungsbeispiel gemäß Figur 11 wird deutlich, dass die Auswerteeinheit 4 eine funktionelle Einrichtung ist und sich in diesem Fall sogar mit der Stromversorgung 7 teilweise überschneidet, da Teile der Auswerteeinheit 4 in der Stromversorgung 7, wie zum Beispiel hier die Photodiode 27 angeordnet sind.

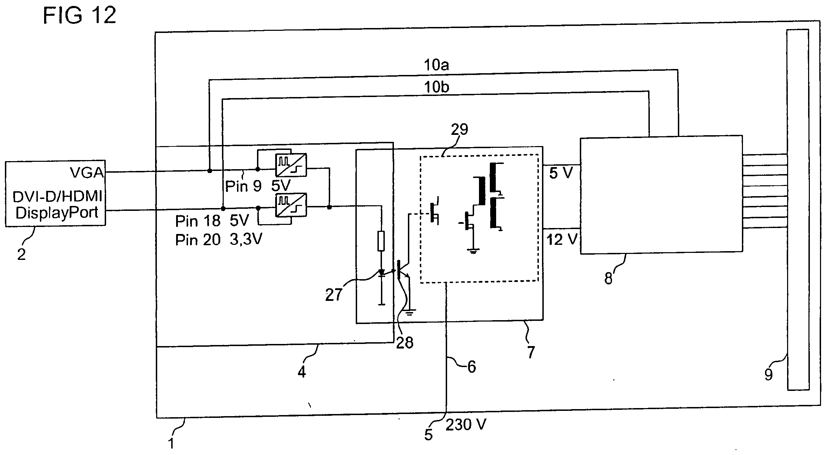

Figur 12 zeigt eine Weiterbildung der Figur 11, wobei für die Ansteuerung der Photodiode 27 zusätzlich die Sync-Signale bei der Ausbildung der Standardschnittstelle 3 als VGA-Schnittstelle beziehungsweise die Taktsignale bei der Ausbildung der Standardschnittstelle 3 als DVI-D-Schnittstelle verwendet bzw. ausgewertet werden.

Durch diese Ausbildung ist es möglich auch bei Signalisierung eines Energiesparzustandes von dem zweiten elektronischen Gerät 2 z.B. über die Syncsignale oder die Taktsignale die Stromversorgung abzuschalten.

Die Sync-Signale beziehungsweise die Taktsignale aus den Verbindungsleitungen der Standardschnittstelle können nicht nur zur Ansteuerung verwendet werden, sondern auch die Energie aus diesen Signalen kann zur Versorgung der Auswerteeinheit 4 zumindest für den Zeitraum, in welchem sich das elektronische Gerät 1 im Energiesparzustand befindet, verwendet werden.

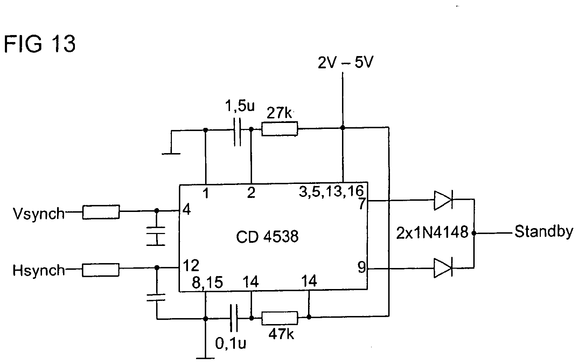

Figur 13 zeigt einen Schaltplan für eine Auswerteschaltung zur Auswertung der vertikalen beziehungsweise horizontalen Synchronisationssignale einer Standardschnittstelle, um je nach Unterbrechung von VSYNC oder HSYNC oder beiden SYNC-Signalleitungen die Signalisierung abzugeben, dass das daran angeschlossene Gerät oder die daran angeschlossene Einrichtung die Steuerung des elektronischen Gerätes 1 in Standby, das heißt in den Energiesparzustand veranlassen soll.

Bei der Schaltung gemäß Figur 13 ist ein so genannter Timer-IC mit der Produktbezeichnung CD4538 vorgesehen. Dieser Schaltkreis beinhaltet zwei Monoflops, wobei die Eingänge an den Pins 4 und 12 angesprochen werden können. Die Pins 7 und 9 sind die Ausgänge, die über zwei Dioden zu einem gemeinsamen Standby-Ausgang geführt sind. Die zeitlichen Charakteristika der Monoflops werden über die externe Kondensatoren und Widerstände eingestellt, die im vorliegenden Ausführungsbeispiel mit 1,5 µF und 27 kΩ beziehungsweise 0,1 µF und 47 kΩ dimensioniert sind.

Wenn das VSYNC-Signal und/oder das HSYNC-Signal für eine Zeitdauer unterbrochen werden, die länger ist als eine durch die externe Beschaltung eingestellte Zeitdauer, so wird am Standby-Ausgang ein dies anzeigendes Signal erzeugt. Die beiden Dioden an den Ausgängen 7 und 9 stellen dabei eine ODER-Verknüpfung der Ausgangssignale an den Pins 7 und 9 dar. Ein Standby-Signal wird also erzeugt, wenn eines der Signale VSYNC oder HSYNC oder beide Signale VSYNC und HSYNC unterbrochen werden.

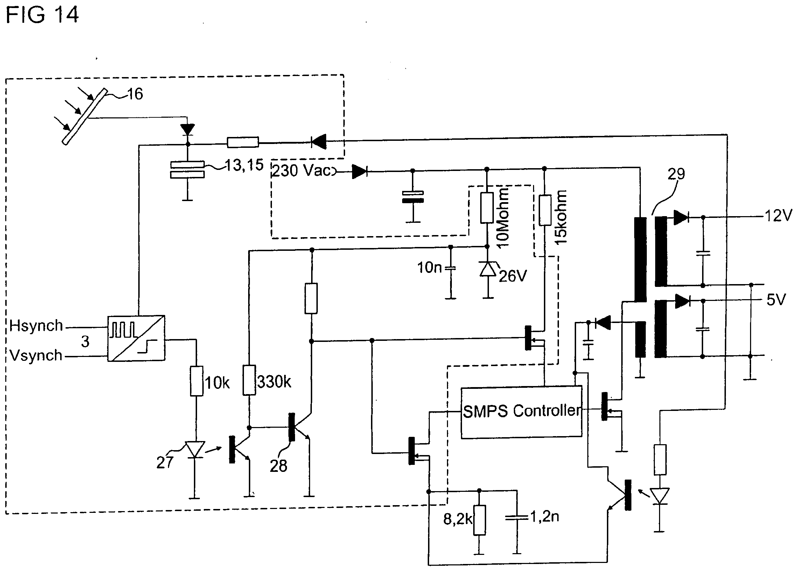

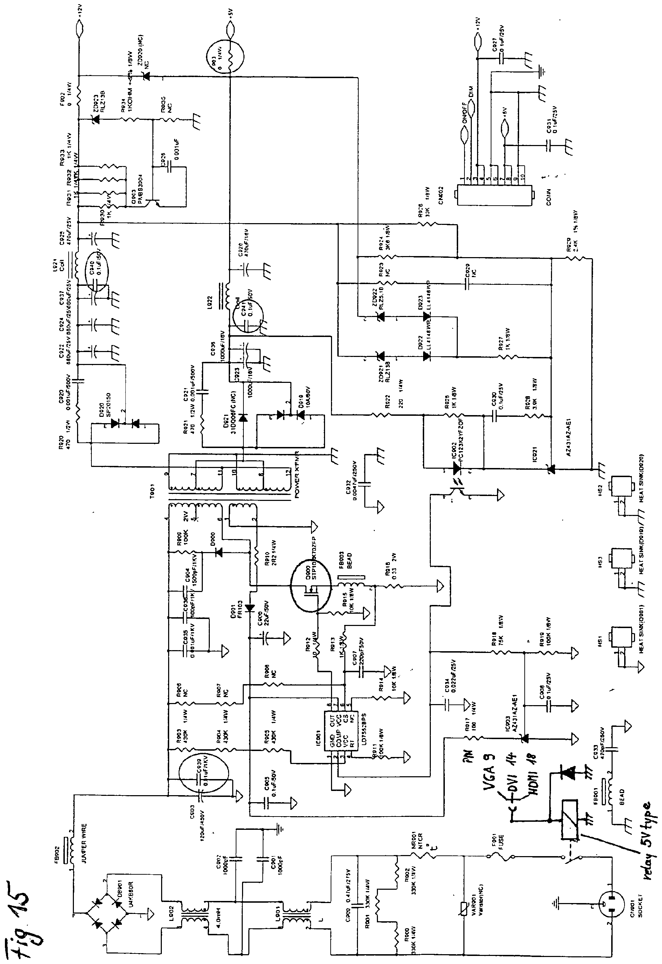

Figur 14 zeigt einen Schaltplan für eine Ausführungsform mit Solarzelle, Akku und/oder Kondensator und Auswertung der Sync-Signale der Standardschnittstelle sowie optoelektronischer Kopplung mit Photodiode 27 und Phototransistor 28.

In dem nicht grau hinterlegten Bereich ist der Pulsweitenmodulator 29 der Stromversorgung 7 dargestellt. Der Pulsweitenmodulator 29 weist einen so genannten SMPS-Controller 30 auf und in der dargestellten Schaltung ist dargestellt, wie über die einfache optoelektronische Kopplung mit einem FET-Schalter am SMPS-Controller die Stromversorgung 7 abgeschaltet werden kann, um das elektronische Gerät 1 in einen Energiesparzustand zu versetzen.

Durch eine Solarzelle 16 wird über eine Diode 4 ein Akku 13, 15 geladen. Der Akku stellt die Betriebsspannung für die HSYNC-/VSYNC-Auswerteschaltung bereit. Am Ausgang der Auswerteschaltung wird, wie anhand von Figur 13 beschrieben, ein Standby-Signal ausgegeben, wenn HSYNC und/oder VSYNC für eine bestimmte Zeit unterbrochen waren. Dieses Signal wird auf einen Optokoppler mit einer Leuchtdiode 27 und einem Phototransistor 28 geführt. Durch den Optokoppler wird eine Potentialtrennung zwischen der Niederspannungs-Auswerteschaltung und einer galvanisch mit Netzspannung verbundenen Schaltung hergestellt. Der mit Netzspannung betriebene Schaltungsteil wird über eine einfache Hilfsspannungsversorgungsschaltung versorgt. Die Netzspannung von 230 V wird gleichgerichtet, durch einen Kondensator geglättet und über einen hochohmigen Widerstand, im gezeigten Ausführungsbeispiel 10 MΩ, auf eine Zenerdiode mit einer Zenerspannung von 26 V geführt. Von der 230 V-Wechselspannung bleibt also nur der bis 26 V reichende Teil der positiven Halbwelle übrig, die als 26 V-Versorgungsspannung zum Betrieb der Schaltung bereitsteht. Durch den vorbeschriebenen Optokoppler wird verhindert, dass die 230 V-Wechselspannung beispielsweise bei Defekt der Zenerdiode auf die HSYNC- oder VSYNC-Signalleitung rückwirken kann, was zu einer Zerstörung eines angeschlossenen Computers führen könnte.

Bei Auftreten eines Standby-Signals am Ausgang der Auswerteschaltung wird also angezeigt, wenn das elektronische Gerät in einen Energiesparzustand versetzt werden soll. Dies wird wie folgt realisiert. Der Pulsweitenmodulator 29 weist in Reihe zu einem Übertrager einen Schalttransistor auf, durch den der Übertrager abgeschaltet werden kann. Bei Signalisierung durch die Auswerteschaltung schaltet der Transistor 28 durch. Durch die dadurch veranlassten Schaltzustandsänderung der weiteren Transistoren in diesem Schaltungsteil wird letztendlich der in Reihe zum Übertrager geschaltete Schalttransistor betätigt und der Übertrager abgeschaltet.

Der 5 V-Ausgang am Übertrager ist zusätzlich über eine Diode und einen Widerstand zu dem Eingangs genannten Energiespeicher 13, 15 geführt, so dass im eingeschalteten Zustand des Gerätes der Energiespeicher auch durch die erzeugte sekundäre Gleichspannung geladen wird und nicht allein auf die Solarzelle angewiesen ist.

Die Erfindung ist nicht auf die dargestellten Ausführungsbeispiele beschränkt. Wie sich aus der Vielzahl der Kombination ergibt, sind die einzelnen Merkmale der Ausführungsbeispiele auch zu neuen Ausführungsformen miteinander kombinierbar. Die Erfindung wird durch die Patentansprüche definiert.

Die Erfindung ist insbesondere nicht auf ein Computer und einen Monitor beschränkt, sondern das erste elektronische Gerät kann ebenso ein Fernseher, das weitere elektronische Gerät ein Receiver sein, welcher den Fernseher ansteuert.

### Bezugszeichenliste

- 1: elektronisches Gerät
- 2: weiteres elektronisches Gerät
- 3: Standardschnittstelle
- 4: Auswerteeinheit
- 5: Anschluss
- 6: Leitung
- 7: Stromversorgung
- 8: Scaler-Baustein
- 9: Panel
- 10a, 10b: Leitungen
- 11: Relais
- 12: Schalter
- 13: Kondensator
- 14: Leitung
- 15: Akku
- 16: Solarzelle
- 17: Leitung
- 18: Transistor
- 19: weiterer Schalter
- 20: Umgehungsleitung
- 21: Leitung
- 22: Anschluss für Standardschnittstelle
- 23: Stromversorgung im zweiten elektronischen Gerät
- 24: Leitung
- 25: Messeinrichtung
- 26: Steuereinrichtung
- 27: Photodiode
- 28: Phototransistor
- 29: Pulsweitenmodulator
- 30: SMPS-Controller
- 31: Mikroprozessor
- 34: gemeinsamer Bautstein
- 35: Schalter
- 36: Logikbauteil
- 37: Grafikkontroller
- 38: Bauteil zur Bilddatenerzeugung
- K: Kamera
- T: Tastatur
- M: Maus
- E: Eingabegerät

## Patentansprüche

1. Elektronisches Gerät (1), welches einen Betriebszustand und mindestens einen Energiesparzustand einnehmen kann
- mit einer Stromversorgung (7), die an eine Netzspannung anschließbar ist und
- einer Auswerteeinheit (4), welche das elektronische Gerät (1) vom Betriebszustand in den Energiesparzustand und umgekehrt steuern kann,
- wobei die Auswerteeinheit (4) so mit der Stromversorgung (7) verbunden ist, dass durch die Auswerteeinheit (4) die Stromversorgung (7) für die Einnahme des Energiesparzustandes abgeschaltet und für die Einnahme des Betriebszustandes wieder eingeschaltet werden kann und
- die Auswerteeinheit (4) zumindest im abgeschalteten Zustand der Stromversorgung (7)
-- mit Energie aus einem weiteren elektronischen Gerät (2), das über eine Standardschnittstelle (3) mit dem elektronischen Gerät (1) verbunden ist,
versorgt werden kann,
wobei das elektronische Gerät (1) über eine Standardschnittstelle (3) mit dem weiteren elektronischen Gerät (2) verbunden ist, wobei die Standardschnittstelle eine Spannungsleitung (10a, 10b, 10c) aufweist,
- die Auswerteeinheit (4) zumindest im abgeschalteten Zustand der Stromversorgung(7) mit Energie aus dem weiteren elektronischen Gerät (2) über die Spannungsleitung der Standardschnittstelle versorgt wird und
die Standardschnittstelle eine VGA, eine DisplayPort nach dem VESA Standard, eine DVI-D oder eine HDMI Schnittstelle ist,
**dadurch gekennzeichnet, dass**
das elektronische Gerät einen Kondensator (13) und/oder einen Akku (15) oder eine Solarzelle (16) aufweist und zumindest zum Einschalten der Stromversorgung zusätzlich Energie aus dem Kondensator (13) und/oder Energie aus dem Akku (15) und/oder Energie aus der Solarzelle (16) bereitgestellt wird.

2. Elektronisches Gerät (1) nach Anspruch 1,
**dadurch gekennzeichnet, dass**
ein Schalter (12) in der Zuführung der Netzspannung zu der Stromversorgung (7) angeordnet ist und das Abschalten der Stromversorgung (7) durch Öffnen des Schalters (12) erfolgt.

3. Elektronisches Gerät (1) nach einem nach Anspruch 1 oder 2,
**dadurch gekennzeichnet, dass**
die Auswerteeinheit (4) ein Relais (11) aufweist und durch das Öffnen des Relais (11) die Zuführung der Netzspannung zu der Stromversorgung (7) unterbrochen werden kann.

4. Elektronisches Gerät (1) nach einem der Anspruche 1 bis 3,
**dadurch gekennzeichnet, dass**
die Verbindung zwischen der Auswerteeinheit (4) und der Stromversorgung (7) als optoelektronische Kopplung ausgebildet ist.

5. Elektronisches Gerät (1) nach Anspruch 4,
**dadurch gekennzeichnet, dass**
die Auswerteeinheit (4) eine Photodiode (27) und aufweist und die Stromversorgung (7) mit einem Phototransistor (28) verbunden ist, der über die Photodiode (27) der Auswerteeinheit (4) gesteuert werden kann.

6. Elektronisches Gerät (1) nach einem der Ansprüche 1 bis 5,
**dadurch gekennzeichnet, dass**
die Stromversorgung (7) eine Wechselspannung durch Pulsweitenmodulation in eine Gleichspannung transformiert und hierzu einen Gleichrichter, einen Zerhacker und einen Übertrager aufweist und das Abschalten der Stromversorgung (7) durch ein Abschalten des Übertragers in der Stromversorgung erfolgt.

7. Elektronisches Gerät (1) nach Anspruch 6,
**dadurch gekennzeichnet, dass**
das Abschalten der Stromversorgung (7) durch eine Reduzierung der Pulsweitenmodulation zum Beispiel auf 0 duty cycles erfolgt.

8. Elektronisches Gerät (1) nach einem der Ansprüche 1 bis 7,
**dadurch gekennzeichnet, dass**
der Kondensator (13) mit der Stromversorgung (7) des elektronischen Geräts (1) verbunden ist und im eingeschalteten Zustand der Stromversorgung (7) über die Stromversorgung (7) des elektronischen Geräts (1) aufgeladen wird.

9. Elektronisches Gerät (1) nach einem der Ansprüche 1 bis 8,
**dadurch gekennzeichnet, dass**
zwischen der Auswerteeinheit (4) und den Verbindungsleitungen der Standardschnittstelle ein Transistor (18) angeordnet ist und der Basisstrom für den Transistor (18) aus den Verbindungsleitungen der Standardschnittstelle kommt.

10. Elektronisches Gerät (1) nach einem der Ansprüche 1 bis 9,
**dadurch gekennzeichnet, dass**
die Solarzelle (16) mit dem Kondensator (13) und/oder Akku (15) verbunden ist und auch zur Aufrechterhaltung der Ladung des Kondensators (13) und/oder des Akkus (15) dient.

11. Elektronisches Gerät (1) nach einem der Ansprüche 1 bis 10,
**dadurch gekennzeichnet, dass**
ein Schalter (12) vorgesehen ist, der eine manuelle Verbindung der Stromversorgung (7) mit der Netzspannung erlaubt.

12. Elektronisches Gerät (1) nach einem der Ansprüche 1 bis 11,
**dadurch gekennzeichnet, dass**
die Standardschnittstelle (3) eine Spannungsleitung umfasst und die Auswerteeinheit (4) die Spannungsleitung der Standardschnittstelle auswertet.

13. Elektronisches Gerät (1) nach einem der Ansprüche 1 bis 12,
**dadurch gekennzeichnet, dass**
die Verbindungsleitungen der Standardschnittstelle (3) eine HSYNC, VSYNC und bei Ausbildung als DVI-Schnittstelle eine Taktleitung umfassen und die Auswerteeinheit (4) die HYSNC und/oder die VSYNC und/oder die Taktleitung der Standardschnittstelle (3) auswertet.

14. Verfahren zum Steuern eines elektronischen Geräts (1) nach einem der Ansprüche 1 bis 13 vom Betriebszustand in mindestens einen Energiesparzustand und umgekehrt, wobei
- eine Auswerteeinheit im elektronischen Gerät (1) die Verbindungsleitung der Standardschnittstelle (3) auswertet,
- die Auswerteeinheit (4) so mit der Stromversorgung (7) verbunden ist, dass durch die Auswerteeinheit (4) die Stromversorgung (7) ab- und eingeschaltet werden kann wobei
- das elektronische Gerät (1) über eine Standardschnittstelle (3) mit dem weiteren elektronischen Gerät (2) verbunden ist, wobei die Standardschnittstelle eine Spannungsleitung (10a, 10b, 10c) aufweist,
- die Auswerteeinheit (4) zumindest im abgeschalteten Zustand der Stromversorgung(7) mit Energie aus dem weiteren elektronischen Gerät (2) über die Spannungsleitung der Standardschnittstelle versorgt wird und die Standardschnittstelle eine VGA, eine DisplayPort nach dem VESA Standard, eine DVI-D oder eine HDMI Schnittstelle ist,
**dadurch gekennzeichnet, dass** zum Einschalten der Stromversorgung (7) zusätzlich
-- Energie aus einem Kondensator (13) und/oder
-- Energie aus einem Akku (15) und/oder
-- Energie aus einer Solarzelle (16) bereitgestellt wird.

## Claims

1. Electronic device (1), which can assume an operating state and at least one energy-saving state, comprising:
- a power supply (7), adapted to be connected to a mains voltage, and
- an evaluation unit (4) adapted to control switching of the electronic device (1) between the operating state and the energy-saving state,
- wherein the evaluation unit (4) is connected to the power supply (7) in such a way that the power supply (7) can be turned off by the evaluation unit (4) for assuming the energy-saving state and can be turned on again for assuming the operating state, and
- the evaluation unit (4) is adapted to be supplied at least in the turned-off state of the power supply (7)
-- with energy from another electronic device (2), which is connected via a standard interface (3) to the electronic device (1), and/or
wherein the electronic device (1) is connected via a standard interface (3) to the further electronic device (2), wherein the standard interface comprises a voltage line (10a, 10b, 10c),
- the evaluation unit (4) is supplied at least in the turned-off state of the power supply (7) with energy from the further electronic device (2) via a voltage line of the standard interface, and
- the standard interface is a VGA, DisplayPort according to the VESA standard, a DVI-D or an HDMI interface, **characterized in that**
the electronic device comprises a capacitor (13) and/or an accumulator (15) and/or a solar cell (16) and energy is additionally provided from the capacitor (13) and/or accumulator (15) and/or solar cell (16) when the power supply is turned on.

2. Electronic device (1) according to claim 1, **characterized in that**
a switch (12) is arranged in the feed of the mains voltage to the power supply (7), and the power supply (7) is turned off by opening the switch (12).

3. Electronic device (1) according to claim 1 or 2, **characterized in that**
the evaluation unit (4) includes a relay (11) arranged to interrupt the feed of the mains voltage to the power supply (7) by opening the relay (11).

4. Electronic device (1) according to any one of claims 1 to 3,
**characterized in that**
the connection between the evaluation unit (4) and the power supply (7) is formed as an optoelectronic coupling.

5. Electronic device (1) according to claim 4, **characterized in that**
the evaluation unit (4) comprises a photodiode (27), and the power supply (7) is connected to a phototransistor (28) adapted to be controlled by means of the photodiode (27) of the evaluation unit (4).

6. Electronic device (1) according to any one of claims 1 to 5,
**characterized in that**
the power supply (7) transforms an alternating voltage into a direct voltage through pulse-width modulation and comprises, for this purpose, a rectifier, a chopper, and a transmitter, and the power supply is turned off by turning off the transmitter in the power supply (7).

7. Electronic device (1) according to claim 6, **characterized in that**
the power supply (7) is turned off by reducing the pulse-width modulation to 0 duty cycles, for example.

8. Electronic device (1) according to any one of claims 1 to 7,
**characterized in that**
the capacitor (13) is connected to the power supply (7) of the electronic device (1), and is charged in the turned-on state of the power supply (7) via the power supply (7) of the electronic device (1).

9. Electronic device (1) according to any one of claims 1 to 8,
**characterized in that**
a transistor (18) is arranged between the evaluation unit (4) and the connection lines of the standard interface, and the base power for the transistor (18) comes from the connection lines of the standard interface

10. Electronic device (1) according to any one of claims 1 to 9,
**characterized in that**
the solar cell (16) and/or the accumulator (15) is connected to the capacitor (13) and is also used for maintaining the charge on the capacitor (13) and/or the accumulator (15).

11. Electronic device (1) according to any one of claims 1 to 10,
**characterized in that**
a switch (12) is provided, which allows the power supply (7) to be manually connected to the mains voltage.

12. Electronic device (1) according to any one of claims 1 to 11,
**characterized in that**
the standard interface (3) includes a voltage line, and the evaluation unit (4) evaluates the voltage line of the standard interface.

13. Electronic device (1) according to any one of claims 1 to 12,
**characterized in that**
the connection lines of the standard interface (3) include an HSYNC, VSYNC and, for the formation as a DVI interface, a clock line, and the evaluation unit (4) evaluates the HSYNC and/or the VSYNC and/or the clock line of the standard interface (3).

14. Method for switching an electronic device (1) according to any one of claims 1 to 13 from the operating state to at least one energy-saving state and vice versa,
whereby
- an evaluation unit in the electronic device (1) evaluates the connection line of the standard interface (3),
- the evaluation unit (4) is connected to the power supply (7) in such a way that the power supply (7) can be turned off and on by means of the evaluation unit (4), wherein
- the electronic device (1) is connected via a standard interface (3) to the further electronic device (2), wherein the standard interface comprises a voltage line (10a, 10b, 10c),
- at least in the turned-off state of the power supply (7), the evaluation unit (4) is supplied with energy from the further electronic device (2) via the voltage line of the standard interface, and the standard interface is a VGA, DisplayPort according to the VESA standard, a DVI-D or an HDMI interface,
**characterized in that**
for turning on the power supply (7), additionally
-- energy from a capacitor (13), and/or
-- energy from an accumulator (15), and/or
-- energy from a solar cell (16)
is provided.

## Revendications

1. Appareil électronique (1), qui peut prendre un état de fonctionnement et au moins un état d'économie d'énergie
- comprenant une alimentation en courant (7), qui peut être raccordée à une tension réseau et
- une unité d'évaluation (4), qui peut commander l'appareil électronique (1) pour le faire passer de l'état de fonctionnement à l'état d'économie d'énergie et inversement,
- l'unité d'évaluation (4) étant raccordée à l'alimentation en courant (7) de telle manière que l'alimentation en courant (7) peut être coupée pour prendre l'état d'économie d'énergie et réactivée pour prendre l'état de fonctionnement par l'unité d'évaluation (4) et
- l'unité d'évaluation (4) pouvant, au moins dans l'état coupé de l'alimentation en courant (7), être alimentée
-- par de l'énergie provenant d'un autre appareil électronique (2), qui est raccordé à l'appareil électronique (1) par le biais d'une interface standard (3),
l'appareil électronique (1) étant raccordé à l'autre appareil électronique (2) par le biais d'une interface standard (3), l'interface standard comportant une ligne de tension (10a, 10b, 10c),
- l'unité d'évaluation (4) étant, au moins dans l'état coupé de l'alimentation en courant (7), alimentée par de l'énergie provenant de l'autre appareil électronique (2) par le biais de la ligne de tension de l'interface standard et
l'interface standard étant une interface VGA, DisplayPort selon la norme VESA, DVI-D ou HDMI,
**caractérisé en ce que**
l'appareil électronique comporte un condensateur (13) et/ou un accumulateur (15) ou une cellule solaire (16) et de l'énergie provenant du condensateur (13) et/ou de l'énergie provenant de l'accumulateur (15) et/ou de l'énergie provenant de la cellule solaire (16) est fournie en plus au moins pour l'activation de l'alimentation en courant.

2. Appareil électronique (1) selon la revendication 1, **caractérisé en ce que**
un interrupteur (12) est disposé dans l'alimentation de la tension réseau vers l'alimentation en courant (7) et la coupure de l'alimentation en courant (7) est effectuée par l'ouverture de l'interrupteur (12).

3. Appareil électronique (1) selon la revendication 1 ou 2, **caractérisé en ce que**
l'unité d'évaluation (4) comporte un relais (11) et l'alimentation de la tension réseau vers l'alimentation en courant (7) peut être interrompue par l'ouverture du relais (11).

4. Appareil électronique (1) selon l'une des revendications 1 à 3,
**caractérisé en ce que**
le raccordement entre l'unité d'évaluation (4) et l'alimentation en courant (7) est réalisée sous la forme d'un couplage optoélectronique.

5. Appareil électronique (1) selon la revendication 4, **caractérisé en ce que**
l'unité d'évaluation (4) comporte une photodiode (27) et l'alimentation en courant (7) est raccordée à un phototransistor (28) qui peut être commandé par le biais de la photodiode (27) de l'unité d'évaluation (4).

6. Appareil électronique (1) selon l'une des revendications 1 à 5,
**caractérisé en ce que**
l'alimentation en courant (7) transforme une tension alternative en tension continue par modulation d'impulsions en largeur et comporte à cet effet un redresseur, un hacheur et un transformateur et la coupure de l'alimentation en courant (7) est effectuée par une désactivation du transformateur dans l'alimentation en courant.

7. Appareil électronique (1) selon la revendication 6, **caractérisé en ce que**
la coupure de l'alimentation en courant (7) est effectuée par une réduction de la modulation d'impulsions en largeur par exemple à 0 cycle de service.

8. Appareil électronique (1) selon l'une des revendications 1 à 7,
**caractérisé en ce que**
le condensateur (13) est raccordé à l'alimentation en courant (7) de l'appareil électronique (1) et est chargé par le biais de l'alimentation en courant (7) de l'appareil électronique (1) lorsque l'alimentation en courant (7) est dans l'état activé.

9. Appareil électronique (1) selon l'une des revendications 1 à 8,
**caractérisé en ce qu'**un transistor (18) est disposé entre l'unité d'évaluation (4) et les lignes de raccordement de l'interface standard et le courant de base pour le transistor (18) provient des lignes de raccordement de l'interface standard.

10. Appareil électronique (1) selon l'une des revendications 1 à 9,
**caractérisé en ce que**
la cellule solaire (16) et/ou l'accumulateur (15) sont raccordés au condensateur (13) et servent également au maintien de la charge du condensateur (13) et/ou de l'accumulateur (15).

11. Appareil électronique (1) selon l'une des revendications 1 à 10,
**caractérisé en ce que**
un interrupteur (12) est prévu, qui permet un raccordement manuel de l'alimentation en courant (7) à la tension réseau.

12. Appareil électronique (1) selon l'une des revendications 1 à 11,
**caractérisé en ce que**
l'interface standard (3) comprend une ligne de tension et l'unité d'évaluation (4) évalue la ligne de tension de l'interface standard.

13. Appareil électronique (1) selon l'une des revendications 1 à 12,
**caractérisé en ce que**
les lignes de raccordement de l'interface standard (3) comprennent une ligne HSYNC, VSYNC et en cas de réalisation sous la forme d'une interface DVI, une ligne d'impulsions et l'unité d'évaluation (4) évalue la ligne HSYNC et/ou la linge VSYNC et/ou la ligne d'impulsions de l'interface standard (3).

14. Procédé de commande d'un appareil électronique (1) selon l'une des revendications 1 à 13, pour le faire passer d'un état de fonctionnement à au moins un état d'économie d'énergie et inversement,
selon lequel
- une unité d'évaluation dans l'appareil électronique (1) évalue la ligne de raccordement de l'interface standard (3),
- l'unité d'évaluation (4) est raccordée à l'alimentation en courant (7) de telle manière que l'alimentation en courant (7) peut être coupée et activée par l'unité d'évaluation (4),
dans lequel
- l'appareil électronique (1) est raccordé à l'autre appareil électronique (2) par le biais d'une interface standard (3), l'interface standard comportant une ligne de tension (10a, 10b, 10c),
- l'unité d'évaluation (4) est, au moins dans l'état coupé de l'alimentation en courant (7), alimentée par de l'énergie provenant de l'autre appareil électronique (2) par le biais de la ligne de tension de l'interface standard et l'interface standard est une interface VGA, DisplayPort selon la norme VESA, DVI-D ou HDMI, **caractérisé en ce que**, pour l'activation de l'alimentation en courant (7),
-- de l'énergie provenant d'un condensateur (13) et/ou
-- de l'énergie provenant d'un accumulateur (15) et/ou
-- de l'énergie provenant d'une cellule solaire (16) est fournie en plus.
